# EUROPÄISCHE PATENTANMELDUNG

(11) **EP 0 964 098 A1**
(43) Veröffentlichungstag der Anmeldung: **15.12.1999**
(21) Anmeldenummer: 98890175.7
(22) Anmeldetag: 10.06.1998
(51) Int. Cl.: D21F 1/48, F16B 1/00

(54) **Anordnung zum Befestigen von Belagsplatten aus Hartmaterial auf einem Vergussmaterialträger**

(71) Anmelder: Egger, Johann, 8833 Teufenbach (AT)
(72) Erfinder: Egger, Johann, 8833 Teufenbach (AT)
(74) Vertreter: Weiser, Andreas, Dipl.-Ing.

(57) **Zusammenfassung**

Anordnung zum Befestigen von Belagsplatten (1) aus Hartmaterial, insbesondere keramischem Material, auf einem Vergußmaterialträger (2), wobei in die Unterseite der Belagsplatten von einem unterschiedlich spitzwinkelig angesetzten Hohlringfräser herrührende Schlitze (4) eingefräst sind, und wobei in die Schlitze (4) die Enden (5) von Rohrhülsen (6) eingreifen, welche mit ihren anderen Enden (7) im Vergußmaterialträger (2) eingebettet sind.

## Beschreibung

Die Erfindung betrifft eine Anordnung zum Befestigen von Belagsplatten aus Hartmaterial, insbesondere keramischem Material, auf einem Vergußmaterialträger, wobei in die Unterseite der Belagsplatten von einem unterschiedlich spitzwinkelig angesetzten Hohlringfräser herrührende Schlitze eingefräst sind.

Derartige Befestigungsanordnungen kommen insbesondere in der Papier- und Kartonerzeugung zum Einsatz. Speziell Beläge von Entwässerungskästen, Saugkästen, Brusttischen od. dgl., über welche die Siebe der Papiermaschine ablaufen, unterliegen einer hohen Abnützung, sodaß dafür ausschließlich Hartmaterialien, insbesondere Keramikplatten, als Oberflächenbeläge in Frage kommen. Die vorliegende Erfindung ist jedoch nicht auf dieses Anwendungsgebiet beschränkt, sondern läßt sich überall dort anwenden, wo Belagsplatten aus Hartmaterial auf einem Vergußmaterialträger verankert werden sollen.

Unter dem Begriff "Vergußmaterialträger" wird in der vorliegenden Beschreibung jede beliebige Trägeranordnung verstanden, welche ganz oder zumindest teilweise aus Vergußmaterial besteht, so daß an der Unterseite der Belagsplatten angreifende Befestigungselemente darin eingebettet werden können. Unter den Begriff "Vergußmaterialträger" fallen daher sowohl kontinuierliche Trägerschichten aus Vergußmaterial als auch lokalisierte Anhäufungen von Vergußmaterial in oder auf einer starren Trägerkonstruktion, beispielsweise mit Klebstoff ausgefüllte Vertiefungen in einer Tragplatte.

Eine Anordnung der einleitend genannten Art ist aus der US-PS 4 449 565 bekannt. Bei der bekannten Anordnung werden in jeweils zwei benachbarte, zueinandergerichtete Schlitze nach außen gerichtete, der Ringform der Schlitze angepaßte Schenkel eines Bügelclips eingesetzt, welcher mit seinem Mittelteil im Vergußmaterial eingebettet ist. Die Herstellung derartiger Bügelclips ist aufwendig und erfordert eine genaue Anpassung der Flächenkrümmung der Schenkelenden an die Kreisringform der Schlitze unter Berücksichtigung der Winkelstellung der Schlitze. Darüber hinaus müssen die Bügelclips eine verhältnismäßig geringe Breite haben, weil sie sonst nicht entsprechend verformt werden können, um in beide Schlitze eingesetzt werden zu können, was die Haltekraft der Verbindung begrenzt.

Die Erfindung setzt sich zum Ziel, eine Anordnung der eingangs genannten Art zu schaffen, welche einfacher hergestellt werden kann und eine vergrößerte Haltekraft besitzt.

Dieses Ziel wird bei einer Anordnung der genannten Art erfindungsgemäß dadurch erreicht, daß in die Schlitze die Enden von Rohrhülsen eingreifen, welche mit ihren anderen Enden im Vergußmaterialträger eingebettet sind.

Auf diese Weise wird eine wesentlich einfacher herzustellende und haltbarere Verbindung erzielt. Die Rohrhülsen entsprechen in ihrem Durchmesser einfach dem bei der Herstellung der Schlitze verwendeten Hohlringfräser und können einfach durch Abtrennen von einem Rohrstück gefertigt werden. Darüber hinaus greifen sie über einen Großteil ihres Umfanges (abhängig von der Tiefe der Schlitze) in das Hartmaterial ein, im Gegensatz zu den schmalen Clips der bekannten Konstruktion, was die Haltekraft der Verbindung wesentlich erhöht.

Eine besonders stabile Konstruktion ergibt sich, wenn gemäß einem bevorzugten Merkmal der Erfindung die Rohrhülsen aus Metall gefertigt sind.

Eine weitere Verbesserung der Festigkeit und Haltbarkeit der Befestigungsanordnung kann erreicht werden, wenn gemäß einem weiteren vorteilhaften Merkmal der Erfindung je zwei in benachbarte, unter unterschiedlichen Winkeln eingefräste Schlitze eingreifende Rohrhülsen über einen Verbindungsbügel miteinander verbunden sind. Der Verbindungsbügel kommt zur Gänze im Vergußmaterialträger zu liegen.

Der Verbindungsbügel kann bevorzugt aus Metall gefertigt und mit den Rohrhülsen verlötet oder verschweißt sein. Alternativ können die verbundenen Rohrhülsen mitsamt ihrem Verbindungsbügel aus einem einzigen rohrförmigen Rohling gefertigt werden, welcher auf etwa halber Axiallänge senkrecht zur Axialrichtung bis auf einen zum Verbindungsbügel umbiegbaren Mantelsteg durchtrennt ist. Diese Variante ergibt eine einstückige Ausführung jeweils zweier benachbarter Rohrhülsen mitsamt ihrem Verbindungsbügel, was eine effiziente Vorfertigung dieser Teile ermöglicht.

Die erfindungsgemäßen Verbindungsbügel eröffnen auch die Möglichkeit, an den Stößen aneinandergrenzender Belagsplatten die Stöße überspannende Verbindungsbügel vorzusehen. Dadurch können aneinandergrenzende Belagsplatten in ihrer gegenseitigen Lage fixiert und verspannt werden.

Zur weiteren Verbesserung der Ausrichtung und Fixierung aneinandergrenzender Belagsplatten kann gemäß einer bevorzugten Ausführungsform der Erfindung vorgesehen werden, daß die aneinandergrenzenden Belagsplatten zusätzlich mit Hilfe von Metallstreifen ausgerichtet sind, welche in ebene, fluchtende Stirnseitenschlitze der Belagsplatten eingesetzt sind, wobei pro Belagsplatte und Stoß zumindest zwei unter unterschiedlich spitzen Winkeln von der Unterseite der Belagsplatte her eingefräste Schlitze vorgesehen sind. Auf diese Weise wird eine Art "Schwalbenschwanzhalterung" erzielt, wobei sich die Belagsplatten gegenseitig fixieren. Dies ermöglicht es, auch große Punktbelastungen an den Stößen aneinandergrenzender Belagsplatten aufzunehmen.

Es ist zweckmäßig, zwischen aneinandergrenzenden Belagsplatten eine elastische Zwischenschicht anzuordnen. Dies vermeidet bei Schwingungen oder Vibrationen ein Splittern, Springen oder Ausbrechen der aneinandergefügten Belagsplatten.

Die Erfindung wird nachstehend an Hand von in den Zeichnungen dargestellten Ausführungsbeispielen näher erläutert. In den Zeichnungen zeigt
Fig. 1 einen Querschnitt durch die erfindungsgemäße Befestigungsanordnung,
Fig. 2 eine Draufsicht auf die Unterseite der Belagsplatten vor dem Einsetzen der Rohrhülsen,
Fig. 3 verschiedene Varianten von über Verbindungsbügel verbundenen Rohrhülsen im Querschnitt,
Fig. 4 eine weitere Variante der erfindungsgemäßen Befestigungsanordnung,
die Fig. 5 und 6 eine Draufsicht und eine Seitenansicht auf einen Rohling, welcher zu der in Fig. 4 dargestellten Rohrhülsen/Verbindungsbügel-Kombination umgeformt werden kann, und
Fig. 7 eine Stirnansicht der Stoßfuge der Belagsplatten von Fig. 4.

Die in den Figuren dargestellte Befestigungsanordnung dient zum Befestigen einer Belagsplatte 1 aus Hartmaterial, insbesondere Keramik, auf einem Träger 2 aus Vergußmaterial, z.B. Kunststoff, Kunstharz oder Klebstoff.

Der Vergußmaterialträger 2 kann eine kontinuierliche Schicht aus Vergußmaterial sein, auf welcher die Belagsplatten 1 ruhen, oder kann die Belagsplatten auch nur an einzelnen Stellen halten, beispielsweise wenn das Vergußmaterial lediglich in entsprechenden Vertiefungen bzw. Aufnahmen einer Tragplatte oder Stützkonstruktion vorgesehen wird.

In die Unterseite 3 der Belagsplatte 1 sind Schlitze 4 eingefräst, welche durch Ansetzen eines (nicht dargestellten) Hohlringfräsers unter alternierenden spitzen Winkeln zur Unterseite 3 in der Belagsplatte 1 eingefräst worden sind.

In die Schlitze 4 sind die Enden 5 von Rohrhülsen 6 aus Metall, Z.B. Messing oder Stahl, eingesetzt. Der verbleibende Teil 7 der Rohrhülsen 6 ist in den Vergußmaterialträger 2 eingebettet, z.B. eingegossen.

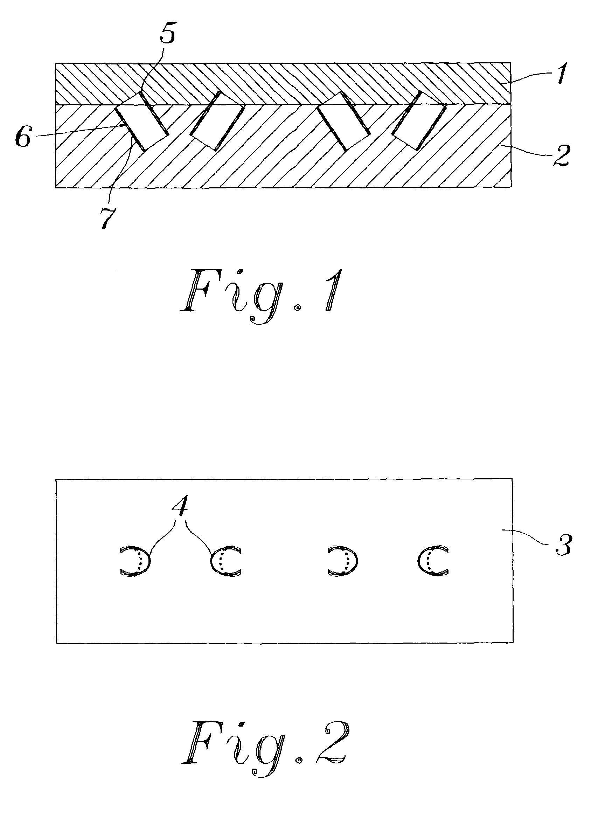

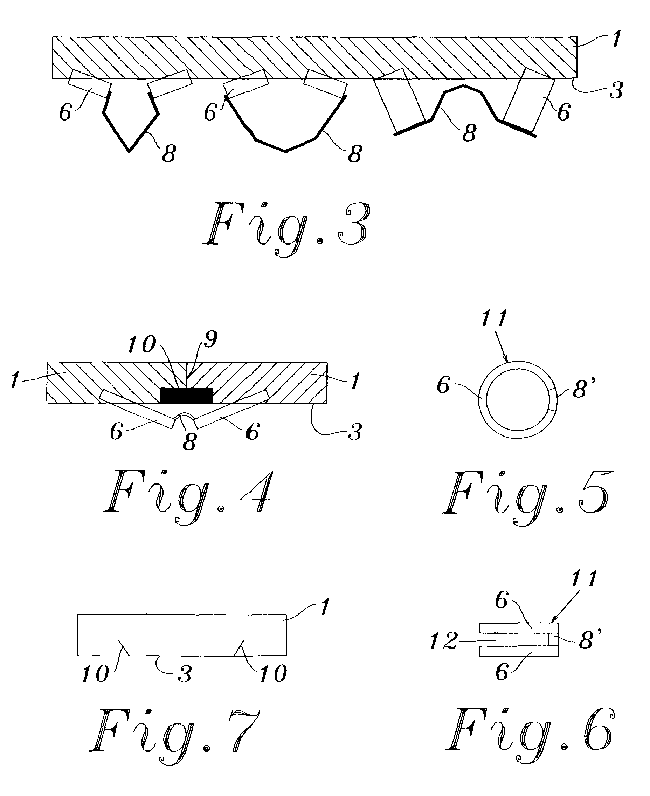

In Fig. 3 ist gezeigt, wie in benachbarte, unter unterschiedlichen Winkeln eingefräste Schlitze 4 eingreifende Rohrhülsen 6 jeweils über einen Verbindungsbügel 8 miteinander verbunden werden können. Der Verbindungsbügel 8 wird (wie die Teile 7 der Rohrhülsen 6, siehe Fig. 1) in den Vergußmaterialträger 2 eingebettet. Die Verbindungsbügel 8 können aus beliebigem Material gefertigt und von beliebiger Form sein; im Falle von Rohrhülsen 6 aus Metall sind die Verbindungsbügel 8 bevorzugt ebenfalls aus Metall und insbesondere mit den Rohrhülsen 6 verlötet oder verschweißt. Im einfachsten Fall sind die Verbindungsbügel 8 gebogene Runddrahtstücke oder Metallstreifenabschnitte.

Gemäß Fig. 4 kann die axiale Erstreckung der Rohrhülsen 6 auch wesentlich kleiner als ihr Durchmesser sein, sodaß sie sich der Form von Ringen annähern. Aus Fig. 4 ist ferner ersichtlich, daß ein Verbindungsbügel 8 auch den Stoß 9 aneinandergrenzender Belagsplatten 1 überspannen kann, um diese gegeneinander auszurichten und zu fixieren. Zusätzlich können den Stoß 9 überbrückende Metallstreifen 10 vorgesehen werden, welche in fluchtende Schlitze auf den einander zugewandten Stirnseiten der Belagsplatten 1 eingesetzt sind. Pro Belagsplatte und Stoß werden zumindest zwei Stirnseitenschlitze für Metallstreifen 10 vorgesehen (Fig. 7), wobei die Schlitze von der Unterseite 3 der Belagsplatte 1 her in diese unter bevorzugt alternierenden spitzen Winkeln eingefräst werden (Fig. 7).

Die Figuren 5 und 6 zeigen einen Rohling zur einfachen Fertigung der in Fig. 4 dargestellten Rohrhülsen/Verbindungsbügel-Kombination. Der Rohling 11 ist rohrförmig und weist etwa in der Mitte seiner Axialerstreckung einen senkrecht zur Axialrichtung verlaufenden Einschnitt 12 auf, welcher den Rohling bis auf einen Mantelsteg 8' durchtrennt. Durch Auseinanderbiegen der zu beiden Seiten des Einschnitts 12 verbliebenen Rohrenden, welche anschließend die Rohrhülsen 6 bilden, gelangt man zu der in Figur 4 gezeigten Konfiguration.

## Patentansprüche

1. Anordnung zum Befestigen von Belagsplatten (1) aus Hartmaterial, insbesondere keramischem Material, auf einem Vergußmaterialträger (2), wobei in die Unterseite der Belagsplatten von einem unterschiedlich spitzwinkelig angesetzten Hohlringfräser herrührende Schlitze (4) eingefräst sind, dadurch gekennzeichnet, daß in die Schlitze (4) die Enden (5) von Rohrhälsen (6) eingreifen, welche mit ihren anderen Enden (7) im Vergußmaterialträger (2) eingebettet sind.

2. Anordnung nach Anspruch 1, dadurch gekennzeichnet, daß die Rohrhülsen (6) aus Metall gefertigt sind.

3. Anordnung nach Anspruch 1 oder 2, dadurch gekennzeichnet, daß je zwei in benachbarte, unter unterschiedlichen Winkeln eingefräste Schlitze (4) eingreifende Rohrhülsen (6) über einen Verbindungsbügel (8) miteinander verbunden sind.

4. Anordnung nach Anspruch 2 und 3, dadurch gekennzeichnet, daß der Verbindungsbügel (8) aus Metall gefertigt und mit den Rohrhülsen (6) verlötet oder verschweißt ist.

5. Anordnung nach Anspruch 3, dadurch gekennzeichnet, daß die verbundenen Rohrhülsen (6) mitsamt ihrem Verbindungsbügel (8) aus einem einzigen rohrförmigen Rohling (11) gefertigt sind, welcher auf etwa halber Axiallänge senkrecht zur Axialrichtung bis auf einen zum Verbindungsbügel (8) umbiegbaren Mantelsteg (8') durchtrennt (12) ist.

6. Anordnung nach einem der Ansprüche 3 bis 5, dadurch gekennzeichnet, daß die Verbindungsbügel (8) auch den Stoß (9) aneinandergrenzender Belagsplatten (1) überspannen.

7. Anordnung nach Anspruch 6, dadurch gekennzeichnet, daß der Stoß zusätzlich mit Hilfe von Metallstreifen (10) ausgerichtet ist, welche in ebene, fluchtende Stirnseitenschlitze der Belagsplatten (1) eingesetzt sind, wobei pro Belagsplatte zumindest zwei unter unterschiedlich spitzen Winkeln von der Unterseite (3) der Belagsplatte (1) her eingefräste Schlitze vorgesehen sind.
